# EUROPEAN PATENT APPLICATION

(11) **EP 3 902 266 A1**
(43) Date of publication of application: **27.10.2021**
(21) Application number: 19904603.8
(22) Date of filing: 17.01.2019
(51) Int. Cl.: H04N 21/234, H04N 21/235, H04N 21/2387, H04N 21/239, H04L 29/08

(54) **PROCESSING METHOD FOR DRAGGING VIDEO DATA AND PROXY SERVER**

(30) Priority: 28.12.2018 CN 201811623054
(71) Applicant: Wangsu Science & Technology Co., Ltd., Shanghai 200030 (CN)
(72) Inventor: LUO, Mingming, Shanghai 200030 (CN)
(74) Representative: De Arpe Tejero, Manuel
(86) International application number: PCT/CN2019/072175
(87) International publication number: WO 2020/133608

(57) **Abstract**

The present disclosure discloses a method for processing video-dragging data. The method includes: receiving a video dragging request directed to a target video and initiated by a client; in response to the video dragging request, constructing a video-range request directed to the target video, and sending the video-range request to an origin server that stores the target video; parsing the feedback metadata and media-data header information to obtain a metadata instance of the target video, and determining a start position and an end position in media data of the target video that correspond to the video dragging parameters; constructing a data acquisition request that contains the start position and the end position, sending the data acquisition request to the origin server, and sending the feedback video-dragging data to the client. The technical solution provided in this disclosure can enable the proxy server to normally process video dragging request.

## Description

### FIELD OF THE DISCLOSURE

The present disclosure relates to the field of internet technology and, more particularly, relates to a method for processing video-dragging data and a proxy server.

### BACKGROUND

With the continuous increase of network communication bandwidth, current video playback websites usually support online video playback. When watching videos online, users may drag the video playback progress. Each time after a user drags the video, the video client will generate a video dragging request, and the video dragging request may be sent by the video client to the origin server that stores the video. As such, the origin server may be able to feed back the corresponding video content to the video client according to the video dragging request.

The current implementation for dragging video usually requires that a cached or stored video file exists in the origin server, so that the origin server may be able to feed back the corresponding content to the video client according to the video dragging request.

However, in some existing network architectures, between a video client and a origin server, data are often forwarded through a proxy server. However, in the proxy server, video files are usually not cached, thereby making the current proxy server unable to effectively process video dragging requests initiated by video clients.

### BRIEF SUMMARY OF THE DISCLOSURE

The purpose of the present disclosure is to provide a method for processing video-dragging data and a proxy server, such that the proxy server is also able to process video dragging requests in a normal way.

To achieve the purpose described above, one aspect of the present disclosure provides a method for processing video-dragging data. The method includes: receiving a video dragging request directed to a target video and initiated by a client, the video dragging request including video dragging parameters used to define a drag start time point and a drag end time point; according to the video dragging request, constructing a video-range request directed to the target video, and sending the video-range request to an origin server that stores the target video to obtain metadata and media-data header information of the target video; parsing the metadata and the media-data header information to obtain a metadata instance of the target video, and determining, according to the metadata instance, a start position and an end position in the media data of the target video that correspond to the video dragging parameters; and constructing a data acquisition request that contains the start position and the end position, sending the data acquisition request to the origin server, and after receiving the video-dragging data feedback from the origin server, sending the video-dragging data to the client.

To achieve the purpose described above, another aspect of the present disclosure provides a proxy server. The proxy server includes: a video-dragging-request receiving unit, configured to receive a video dragging request directed to a target video and initiated by a client, the video dragging request including video dragging parameters used to define a drag start time point and a drag end time point; a data acquisition unit, configured to, in response to the video dragging request, construct a video-range request directed to the target video, and send the video-range request to an origin server that stores the target video to obtain metadata and media-data header information of the target video; a location determination unit, configured to parse the metadata and the media-data header information to obtain a metadata instance of the target video, and determine, according to the metadata instance, a start position and an end position in the media data of the target video that correspond to the video dragging parameters; and a video-dragging data sending unit, configured to construct a data acquisition request that contains the start position and the end position, send the data acquisition request to the origin server, and after receiving the video-dragging data feedback from the origin server, send the video-dragging data to the client.

To achieve the purpose described above, another aspect of the present disclosure provides a proxy server. The proxy server includes: a memory and a processor. The memory is configured to store a computer program. When the computer program is executed by the processor, the method for processing video-dragging data described above is implemented.

To achieve the purpose described above, another aspect of the present disclosure provides a method for processing video-dragging data. The method includes: receiving a video dragging request directed to a target video and initiated by a client, and querying a metadata instance corresponding to the video dragging request from a preset hash table; determining, according to the metadata instance, a start position and an end position in the media data of the target video that correspond to the video dragging request; and constructing a data acquisition request that contains the start position and the end position, sending the data acquisition request to an origin server, and after receiving the video-dragging data feedback from the origin server, sending the video-dragging data to the client.

To achieve the purpose described above, another aspect of the present disclosure provides a proxy server. The proxy server includes: a memory and a processor. The memory is configured to store a computer program. When the computer program is executed by the processor, the method for processing video-dragging data described above is implemented.

As can be seen from the above, according to the technical solution provided in the present disclosure, after receiving the video dragging request directed to a target video and initiated by a client, the proxy server is able to construct a video-range request according to the request. The video-range request may obtain part of the data of the target video from an origin server. This part of the data may include metadata and media-data header information of the target video. The proxy server is able to obtain the metadata instance of the target video by parsing the metadata and the media-data header information. The metadata instance may include information about each video frame of the target video. For example, the metadata instance may include a corresponding playback time point of the video frame in the target video and an offset of the video frame in the data of the target video. Then, according to the video dragging parameters in the video dragging request, a start position and an end position in the media data of the target video that correspond to the video dragging parameters may be calculated. Then, by constructing a data acquisition request that contains the start position and the end position, the corresponding video-dragging data may be obtained from the origin server, and the video-dragging data may be sent to the client. As such, through the technical solution provided in the present disclosure, the proxy server may also be able to normally process video dragging requests from clients, and successfully feed back the corresponding video-dragging data to the client.

### BRIEF DESCRIPTION OF THE DRAWINGS

In order to explain the technical solutions in the embodiments of the present disclosure more clearly, the drawings used in the description of the embodiments are briefly introduced below. Obviously, the drawings in the following description are merely some embodiments of the present disclosure. For those of ordinary skill in the art, other drawings can be obtained based on these drawings without paying any creative labor.
FIG. 1 illustrates a schematic diagram of a system architecture according to an embodiment of the present disclosure;
FIG. 2 illustrates a flowchart of a method for processing video-dragging data according to an embodiment of the present disclosure;
FIG. 3 illustrates a schematic diagram of interaction between a client, a proxy server, and an origin server according to an embodiment of the present disclosure;
FIG. 4 illustrates a schematic diagram of function modules of a proxy server according to an embodiment of the present disclosure;
FIG. 5 illustrates a flowchart of a method for processing video-dragging data according to another embodiment of the present disclosure; and
FIG. 6 illustrates a schematic structural view of a proxy server according to an embodiment of the present disclosure.

### DETAILED DESCRIPTION

To make the objectives, technical solutions, and advantages of the present disclosure clearer, various embodiments of the present disclosure will be described in further detail below with reference to the accompanying drawings.

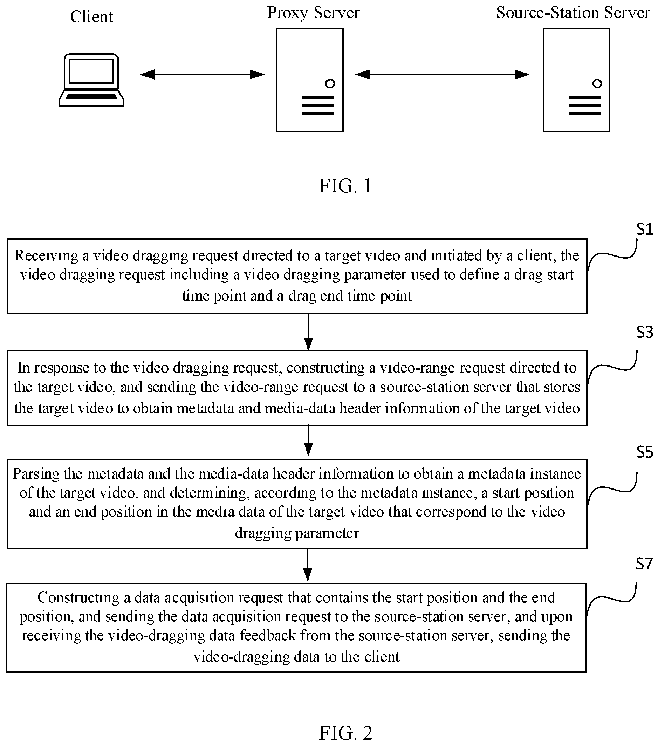

The present disclosure provides a method for processing video-dragging data. The method may be applied to a system architecture shown in FIG. 1. In the system architecture, a client, a proxy server, and an origin server may be included. The client may be a terminal device used by a user. The terminal device may be, for example, an electronic device such as a smart phone, a tablet computer, a notebook computer, a personal computer, a smart TV, a smart wearable device (smart watch, virtual reality glasses, etc.). The client may also be software with a video playback function running in the electronic device described above. For example, the client may be a video client of Youku, iQiyi, Bilibili, AcFun, etc. The proxy server may, by forwarding the request or data between the client and the origin server, maintain the data communication between the client and the origin server. Of course, in application examples, the origin server may also be a cache server that caches video files. For convenience of description, the origin server is described in the present disclosure. Therefore, the origin server in the present disclosure actually refers to a server that stores or caches video files, and does not mean that the communication process with the origin server must be a back-to-source process.

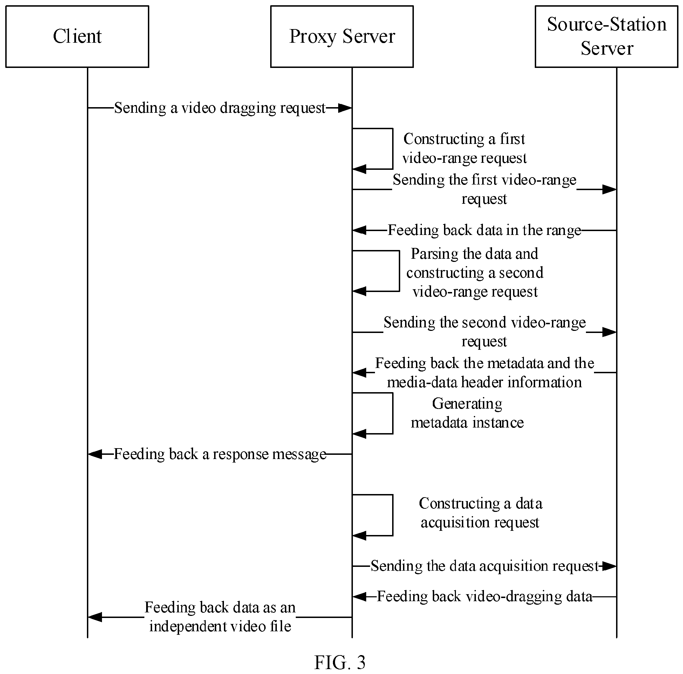

Referring to FIG. 2 and FIG. 3. In the method for processing video-dragging data provided in the present disclosure, an executive entity thereof may be the proxy server described above. As shown in FIG. 2 and FIG. 3, the method may include the following exemplary steps.

S1: Receiving a video dragging request directed to a target video and initiated by a client, the video dragging request including video dragging parameters used to define a drag start time point and a drag end time point.

In the present disclosure, when a user watches an online video in a client, the playback progress of the video may be adjusted by dragging a progress bar. After the dragging action is completed, the position of the progress bar may be the position where the video should start playing. In application examples, a complete video file may be divided into multiple video clips and stored in the origin server, and the client may sequentially obtain the data of the video clips from the origin server and play. Therefore, after the dragging operation is completed on the client, the drag start time point may be determined according to the position of the progress bar, and then may identify the video clip at the drag start time point, and use the end time point of the identified video clip as the drag end time point. As such, after the user completes a drag operation, the client may be able to generate video drag parameters that define the drag start time point and the drag end time point, and then the client may send an HTTP request to the proxy server. The HTTP request may carry a loading address of the target video and the video dragging parameters described above. The HTTP request may be a video dragging request directed to the target video in step S1. As such, the proxy server may receive the video dragging request from the client.

S3: In response to the video dragging request, constructing a video-range request directed to the target video, and sending the video-range request to an origin server that stores the target video to obtain metadata and media-data header information of the target video.

In the present disclosure, after receiving the video dragging request, the proxy server may obtain the video-dragging data corresponding to the video dragging request by analyzing the metadata of the target video. Specifically, the data of a video file may generally include multiple components. Taking a video file in the mp4 format as an example, the mp4 video file may generally include multiple components such as a ftyp box, a moov box, an mdat box, etc. Among them, the ftyp box may indicate the format of the video file and describe the version and compatible protocol of the video file; the moov box may contain the metadata of the video file, and the metadata may describe the information of each video frame in the video; the mdat box may include the media data of the video file, and after the media data is parsed by the client, the corresponding video content may be played. In application examples, the mdat box may contain header information and body information. Among them, the body information may store actual media data, and the header information may be used to describe the data size of the media data in the body information and the data offset of the media data in the entire video file.

In the present disclosure, the proxy server may first try to obtain the metadata of the video file from the origin server. Therefore, the proxy server may extract a loading address of the target video from the video dragging request, and the loading address may be, for example, a URL (Uniform Resource Locator) of the target video. Them, the proxy server may generate a first data interval. The first data interval may be defined by a start data offset and an end data offset. The purpose of the first data interval is to cover the start position of the metadata in the video file. In application examples, a corresponding first data interval may be selected according to different video file formats. For example, for an mp4 file, a data length of 1024 may usually cover the start position of the moov box, then the start data offset and the end data offset of the first data interval may be 0 and 1023, respectively, so that a data interval with a data length of 1024, e.g. [0, 1023], may be constructed. As such, the proxy server may be able to construct a first video-range request that includes the loading address and the first data interval, and may send the first video-range request to the origin server that stores the target video.

In the present disclosure, after receiving the first video-range request, the origin server may determine the data of which video that the proxy server currently needs to obtain through the loading address therein, and then may determine, according to the first data interval, the data of which part of the video that the proxy server needs to obtain. After the proxy server receives the data of the target video that is located in the first data interval and feedback from the origin server, because the data located in the first data interval includes at least the data at the start position of the metadata of the target video, the proxy server may identify the start position of the metadata of the target video in the data located in the first data interval. The start position of the metadata may also be represented by a data offset. For example, the data offset of the start position of the metadata in the video data of the target video is 1000. After the start position of the metadata is identified, in order to successfully parse the metadata instance of the target video, the proxy server needs to obtain all the metadata of the target video and the media-data header information. Generally speaking, both the data length of the metadata and the data length of the media-data header information may be standard lengths, and these two standard lengths may vary for different video file formats. When the video file format is determined, these two standard lengths may usually be determined. In addition, in the video data of the target video, the metadata may be immediately followed by the header information and the body information of the media data. Therefore, the proxy server may determine the start position of the metadata after parsing the data located in the first data interval, and then may determine, based on the start position of the metadata, the standard length of the metadata, and the standard length of the media-data header information, how large a data interval is needed in order to obtain complete metadata and media-data header information, such that a second data interval covering the metadata and the media-data header information may be generated. For example, for an mp4 file, the first data interval is [0, 1023], and after analyzing the data obtained through the first data interval, the start position of the metadata is determined to be 1000. In addition, the standard length of the metadata is 50, and the standard length of the media-data header information is 100. Therefore, the generated second data interval may be [1000, 1149]. Further, the proxy server may construct a second video-range request that includes the second data interval and the loading address, and send the second video-range request to the origin server that stores the target video to obtain the metadata and the media-data header information of the target video.

As such, in the present disclosure, by sending two different video-range requests, metadata and media-data header information of the target video may be obtained.

Of course, in application examples, when the network conditions permit, the proxy server may also directly send a video-range request with a large data interval, so as to obtain all the metadata and media-data header information at once, or even obtain a part of the body information of the media data. Then, the metadata and the media-data header information may be extracted from the obtained data. Therefore, the technical solution of the present disclosure is not limited to the way of obtaining metadata and media-data header information through two video-range requests. While understanding the essence of the technical solution of the present disclosure, those skilled in the art may be able to obtain metadata and media-data header information through more or fewer times of video-range requests according to the actual situation. Those skilled in the art should understand that the above-mentioned ways of sending more or fewer times of video-range requests should also fall within the protection scope of the present disclosure.

S5: Parsing the metadata and the media-data header information to obtain a metadata instance of the target video, and determining, according to the metadata instance, a start position and an end position in the media data of the target video that correspond to the video dragging parameters.

In the present disclosure, after obtaining the metadata and the media-data header information, the proxy server may analyze the detailed information of each video frame in the media data of the target video, the data size of the media data, and the data offset of each video frame in the media data, and other information. By parsing the metadata and the media-data header information, the proxy server may obtain a metadata instance of the target video. The metadata instance may be consistent with the parsing result, so that the detailed information of each video frame in the target video, the data size of the media data, and the data offset of each video frame may be described.

In the present disclosure, after obtaining the metadata instance, the proxy server may store the identifier of the target video and the metadata instance in a key-value manner to facilitate subsequent query. In application examples, the generated metadata instance may be stored by means of a hash table. Specifically, the proxy server may identify the identifier of the target video. The identifier may be, for example, a loading address of the target video or a video name of the target video. Then, the proxy server may calculate a hash value of the identifier. Further, the proxy server may determine the location pointed by the hash value in the preset hash table, and may write the metadata instance of the target video into the determined location. Subsequently, by converting the identifier of the target video into the corresponding hash value, a corresponding metadata instance may be quickly queried from the hash table.

In the present disclosure, after obtaining the metadata instance, the start position and the end position in the media data of the target video that correspond to the video dragging parameters may be determined according to the metadata instance. Here, the start position and the end position may be expressed as data offsets. The video dragging parameters may include a drag start time point and a drag end time point, so the time points may need to be converted into corresponding data offsets. Specifically, because the metadata instance may include detailed information of each video frame, the detailed information may include a time point that corresponds to the video frame in the video. Therefore, by querying the metadata instance, the first video frame information corresponding to the drag start time point and the second video frame information corresponding to the drag end time point may be queried in the metadata instance. Moreover, the video frame information may also include the corresponding data offset of the video frame in the video file. Therefore, the first data offset may be read from the first video frame information and the second data offset may be read from the second video frame information, and the first data offset may be used as the start position while the second data offset may be used as the end position.

S7: Constructing a data acquisition request that contains the start position and the end position, and sending the data acquisition request to the origin server, and upon receiving the video-dragging data feedback from the origin server, sending the video-dragging data to the client.

In the present disclosure, after the start position and the end position are determined, the proxy server may construct a data acquisition request that contains the start position and the end position. Among them, the data acquisition request may actually be a video-range request, and in the video-range request, a data interval constructed by the first data offset and the second data offset described above may be included. As such, after receiving the data acquisition request, the origin server may feed back the video-dragging data in the data interval, that is constructed by the first data offset and the second data offset, to the proxy server. Then, the proxy server may provide the video-dragging data to the client.

Referring to FIG. 3, in one embodiment, after determining the start position and the end position in the media data of the target video that correspond to the video dragging parameters, the proxy server may, according to the video dragging request, feed back a response message to the client. Specifically, the response message may include response header information and response body information. Among them, the response header information may include some description information of the response message. For example, the response header information and may include a communication protocol adopted by the response message, or may include a size of the video-dragging data defined by the start position and the end position. It should be noted that, after receiving the video-dragging data feedback from the origin server, the proxy server may need to send the video-dragging data, as an independent video-dragging file, to the client. In other words, the video-dragging data feedback to the client may also need to include various components of a normal video. For example, for an mp4 file, the proxy server may obtain a part of the media data from the origin server according to the start position and the end position. In addition, in order to ensure the client properly parse and play this part of the media data, the proxy server may need to construct an independent mp4 file based on this part of the media data when feeding back to the client. The constructed file may also need to contain a ftyp box, a moov box, a mdat box, etc. as described above. In application examples, because the video-dragging data is selected from the video data of the target video, each component of the target video may also be applicable to the video file corresponding to the video-dragging data. Therefore, each component in the target video may be inherited, but some parameters may need to be modified correspondingly according to the actual data size of the video-dragging data. As such, an independent video file may be formed to characterize the video-dragging data. In the present disclosure, in the response message returned by the proxy server to the client, the response body information may include the above-mentioned metadata of the dragging video that corresponds to the independent video file. The metadata of the dragging video may be used to describe the playback attributes of the dragging video defined by the start position and the end position. In this way, after sending a video dragging request to the proxy server, the client may receive a response message feedback from the proxy server, and an independent video file that is used to characterize the video-dragging data. As such, the client may be able to play the content of the dragging video by parsing the independent video file.

In one embodiment, when a user drags the playback progress bar again while watching the target video, the client may, again, generate a new video dragging request. After receiving the new video dragging request directed to the target video and initiated by the client again, the proxy server may extract an identifier of the target video from the new video dragging request, calculate the hash value of the identifier of the target video, and then query the location corresponding to the calculated hash value from the preset hash table, and use the metadata instance stored at the location as the metadata instance corresponding to the new video dragging request. As such, the proxy server may be able to directly obtain the metadata instance corresponding to the new video dragging request by querying the hash table. Subsequently, following the process described above, a new start position and a new end position corresponding to the new video dragging request in the media data of the target video may be determined according to the metadata instance. Further, a new data acquisition request that contains the new start position and the new end position may be constructed, and the new data acquisition request may be sent to the origin server. Moreover, after receiving the new video-dragging data feedback from the origin server is received, the new video-dragging data may be sent to the client. Of course, the feedback of the new video-dragging data may also need to be an independent video file. The proxy server may construct a response message for the new video dragging request, and the response message may include response header information and metadata of the dragging video. Among them, the response header information may at least describe the data size of the dragging video defined by the new start position and the new end position, the metadata of the dragging video may be used to describe the playback attributes of the dragging video defined by the new start position and the new end position, and the proxy server may feed back the response message to the client.

As such, by constructing a metadata instance, the proxy server may be able to normally process the video dragging request from a client. In addition, when the client sends a video dragging request for the same video again in the future, by querying the hash table, the cached metadata instance may be directly called from local, and the video clip that needs to be obtained may be determined according to the cached metadata instance. As can be seen from the above, in the present disclosure, for the same video, the metadata instance may only need to be created once, and in response to subsequent dragging requests for the video, the process of creating a metadata instance may be skipped, and the locally-cached metadata instance may be directly used, thereby speeding up data response.

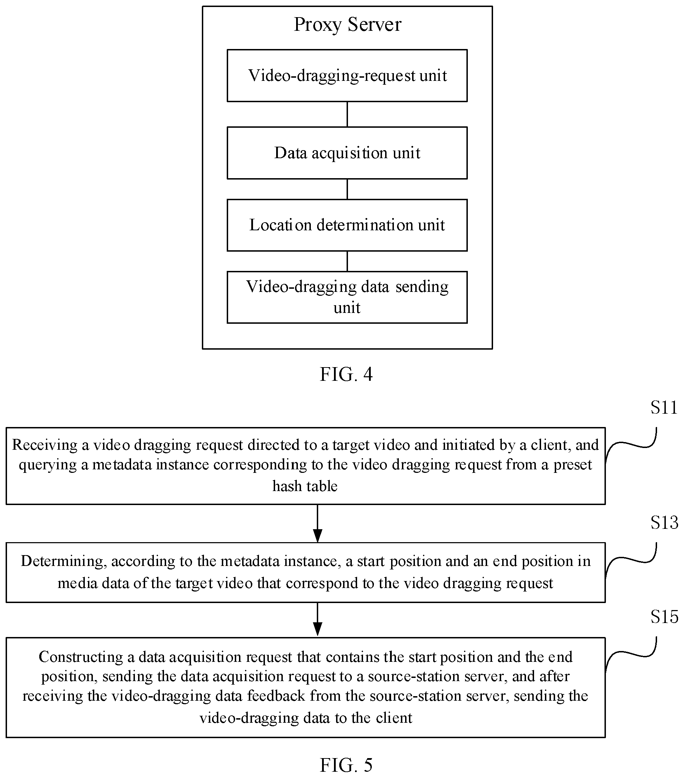

Referring to FIG. 4, the present disclosure also provides a proxy server. The proxy server may include:
A video-dragging-request receiving unit, configured to receive a video dragging request directed to a target video and initiated by a client, the video dragging request including video dragging parameters used to define a drag start time point and a drag end time point;
A data acquisition unit, configured to, in response to the video dragging request, construct a video-range request directed to the target video, and send the video-range request to an origin server that stores the target video to obtain metadata and media-data header information of the target video;
A location determination unit, configured to parse the metadata and the media-data header information to obtain a metadata instance of the target video, and determine, according to the metadata instance, a start position and an end position in the media data of the target video that correspond to the video dragging parameters; and
A video-dragging data sending unit, configured to construct a data acquisition request that contains the start position and the end position, send the data acquisition request to the origin server, and after receiving the video-dragging data feedback from the origin server, send the video-dragging data to the client.

The present disclosure also provides a method for processing video-dragging data. The method may be implemented after generating metadata instances of target videos and writing the metadata instances into a preset hash table. Specifically, referring to FIG. 5, the method may include the following exemplary steps.

S11: Receiving a video dragging request directed to a target video and initiated by a client, and querying a metadata instance corresponding to the video dragging request from a preset hash table;

S 13: Determining, according to the metadata instance, a start position and an end position in media data of the target video that correspond to the video dragging request; and

S15: Constructing a data acquisition request that contains the start position and the end position, sending the data acquisition request to an origin server, and after receiving the video-dragging data feedback from the origin server, sending the video-dragging data to the client.

In one embodiment, querying the metadata instance corresponding to the video dragging request from the preset hash table may include:
Identifying an identifier of the target video from the video dragging request, and calculating the hash value of the identifier; and
Determining a location pointed by the hash value in the preset hash table, and using the metadata instance written at the determined location as the metadata instance corresponding to the video dragging request.

In one embodiment, after determining the start position and the end position in the media data of the target video that correspond to the video dragging request, the method may further include:

Constructing a response message for the video dragging request, the response message including response header information and metadata of the dragging video; where the response header information at least describes the data size of the dragging video defined by the start position and the end position, the metadata of the dragging video is used to describe the playback attributes of the dragging video defined by the start position and the end position; and

Feeding back the response message to the client.

In one embodiment, the metadata instance corresponding to video dragging request may be generated in the following manner:
Constructing a video-range request directed to the target video, and sending the video-range request to the origin server that stores the target video to obtain metadata and media-data header information of the target video; and
Parsing the metadata and the media-data header information to obtain the metadata instance corresponding to the video dragging request.

Specifically, when a user drags the playback progress bar again while watching the target video, the client may, again, generate a new video dragging request. After receiving the new video dragging request directed to the target video and initiated by the client again, the proxy server may extract an identifier of the target video from the new video dragging request, calculate the hash value of the identifier of the target video, and then query the location corresponding to the calculated hash value from the preset hash table, and use the metadata instance stored at the location as the metadata instance corresponding to the new video dragging request. As such, the proxy server may be able to directly obtain the metadata instance corresponding to the new video dragging request by querying the hash table. Subsequently, following the process described above, a new start position and a new end position corresponding to the new video dragging request in the media data of the target video may be determined according to the metadata instance. Further, a new data acquisition request that contains the new start position and the new end position may be constructed, and the new data acquisition request may be sent to the origin server. Moreover, after receiving the new video-dragging data feedback from the origin server is received, the new video-dragging data may be sent to the client. Of course, the feedback of the new video-dragging data may also need to be an independent video file. The proxy server may construct a response message for the new video dragging request, and the response message may include response header information and metadata of the dragging video. Among them, the response header information may at least describe the data size of the dragging video defined by the new start position and the new end position, the metadata of the dragging video may be used to describe the playback attributes of the dragging video defined by the new start position and the new end position, and the proxy server may feed back the response message to the client.

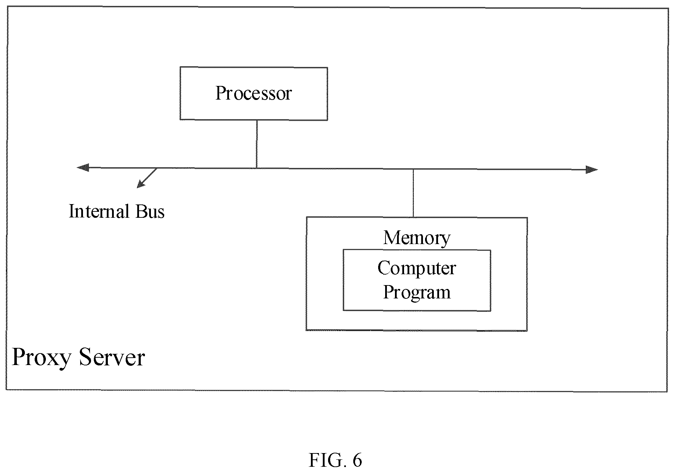

Referring to FIG. 6, the present disclosure further provides a proxy server. The proxy server includes a memory and a processor, where the memory is configured to store a computer program. When the computer program is executed by the processor, the method for processing video-dragging data described above is implemented. Specifically, as shown in FIG. 6, at the hardware level, the proxy server may include a processor, an internal bus, and a memory. The memory may include a random access memory (RAM) and a non-volatile memory. The processor may read the corresponding computer program from the non-volatile memory into the RAM and then execute the computer program. Those of ordinary skill in the art should understand that the structure shown in FIG. 6 is only schematic, and does not limit the structure of the identification device described above. For example, the proxy server may further include more or fewer components than that shown in FIG. 6. In some examples, the proxy server may further include other processing hardware, such as a graphics processing unit (GPU), or the proxy server may have configurations different from those shown in FIG. 6. Of course, in addition to software implementations, the present disclosure does not exclude other implementations, such as logic devices or a combination of software and hardware.

In the present disclosure, the processor may include a central processing unit (CPU) or a graphics processor unit (GPU), and of course, the processor may also include other single-chip microcomputers, logic gate circuits, integrated circuits, etc. with logic processing capabilities, or appropriate combinations thereof. The memory in the present disclosure may be a memory device for storing information. In digital systems, a device that can store binary data may be a memory; in an integrated circuit, a circuit with a storage function but without a physical form may also be a memory, such as RAM, FIFO, etc.; and in systems, a storage device with a physical form may also be called a memory. When implemented, the memory may also be implemented by means of cloud storage. The specific implementation manner is not limited in the present disclosure.

It should be noted that, for the specific implementation manner of the proxy server in the present disclosure, reference may be made to the description of the method embodiments, and the details are not described herein.

As can be seen from the above, according to the technical solution provided in the present disclosure, after receiving a video dragging request directed to a target video and initiated by a client, the proxy server is able to construct a video-range request according to the request. The video-range request can obtain part of the data of the target video from the origin server. This part of the data may include metadata and media-data header information of the target video. The proxy server is able to obtain the metadata instance of the target video by parsing the metadata and the media-data header information. The metadata instance may include information about each video frame of the target video. For example, the metadata instance may include a corresponding playback time point of the video frame in the target video and an offset of the video frame in the data of the target video. Then, according to the video dragging parameters in the video dragging request, a start position and an end position in the media data of the target video that correspond to the video dragging parameters can be calculated. Then, by constructing a data acquisition request that contains the start position and the end position, the corresponding video-dragging data may be obtained from the origin server, and the video-dragging data may be sent to the client. As such, through the technical solution provided in the present disclosure, the proxy server may also be able to normally process video dragging requests from clients, and successfully feed back the corresponding video-dragging data to the client.

Through the description of the above embodiments, those skilled in the art should clearly understand that each embodiment can be implemented by means of software together with a necessary common hardware platform, and of course, can also be implemented by hardware. Based on such an understanding, the part of the technical solution described above that is essential or contributes to existing technology can be embodied in the form of a software product. The product may be stored in a computer-readable storage medium, such as a ROM/RAM, a magnetic disk, a compact discs, etc., and may include instructions for making a computer device (which may be a personal computer, a server, or a network device, etc.) perform the methods described in various embodiments or certain parts of the embodiments.

The above are only preferred embodiments of the present disclosure and are not intended to limit the present disclosure. Any modification, equivalent replacement, or improvement made within the spirit and principle of the present disclosure shall be included in the protection scope of the present disclosure.

## Claims

1. A method for processing video-dragging data, wherein the method comprises:
receiving a video dragging request directed to a target video and initiated by a client, the video dragging request including video dragging parameters used to define a drag start time point and a drag end time point;
according to the video dragging request, constructing a video-range request directed to the target video, and sending the video-range request to an origin server that stores the target video to obtain metadata and media-data header information of the target video;
parsing the metadata and the media-data header information to obtain a metadata instance of the target video, and determining, according to the metadata instance, a start position and an end position in media data of the target video that correspond to the video dragging parameters; and
constructing a data acquisition request that contains the start position and the end position, sending the data acquisition request to the origin server, and after receiving video-dragging data feedback from the origin server, sending the video-dragging data to the client.

2. The method according to claim 1, wherein:
in response to the video dragging request, constructing the video-range request directed to the target video includes:
extracting a loading address of the target video from the video dragging request, generating a first data interval, and constructing a first video-range request that includes the loading address and the first data interval; and
correspondingly, sending the video-range request to the origin server that stores the target video includes:
sending the first video-range request to the origin server that stores the target video to obtain data of the target video that is located in the first data interval, wherein the data located in the first data interval at least includes data at a start position of the metadata of the target video.

3. The method according to claim 2, wherein:
constructing the video-range request directed to the target video further includes:
identifying the start position of the metadata of the target video in the data located in the first data interval, based on the start position of the metadata, a standard length of the metadata, and a standard length of the media-data header information, generating a second data interval that covers the metadata and the media-data header information, and constructing a second video-range request that contains the second data interval and the loading address; and
correspondingly, sending the video-range request to the origin server that stores the target video further includes:
sending the second video-range request to the origin server that stores the target video to obtain the metadata and the media-data header information of the target video.

4. The method according to claim 1, wherein determining, according to the metadata instance, the start position and the end position in the media data of the target video that correspond to the video dragging parameters includes:
querying first video frame information corresponding to the drag start time point in the metadata instance and second video frame information corresponding to the drag end time point in the metadata instance; and
reading a first data offset from the first video frame information and a second data offset from the second video frame information, and using the first data offset as the start position and the second data offset as the end position.

5. The method according to claim 1 or 4, wherein after determining the start position and the end position in the media data of the target video that correspond to the video dragging parameters, the method further includes:
constructing a response message for the video dragging request, the response message including response header information and metadata of a dragging video, wherein the response header information at least describes a data size of the dragging video defined by the start position and the end position, and the metadata of the dragging video is used to describe playback attributes of the dragging video defined by the start position and the end position; and
feeding back the response message to the client.

6. The method according to claim 5, wherein sending the video-dragging data to the client includes:
sending the video-dragging data, as an independent video-dragging file, to the client.

7. The method according to claim 1, wherein after obtaining the metadata instance of the target video, the method further includes:
identifying an identifier of the target video, and calculating a hash value of the identifier; and
determining a location pointed by the hash value in a preset hash table, and writing the metadata instance of the target video into the determined location.

8. The method according to claim 7, wherein the method further includes:
receiving a new video dragging request directed to the target video and initiated by the client again, and querying a metadata instance corresponding to the new video dragging request from the preset hash table;
determining, according to the metadata instance, a new start position and a new end position in the media data of the target video that correspond to new video dragging parameters; and
constructing a new data acquisition request that contains the new start position and the new end position, sending the new data acquisition request to the origin server, and after receiving new video-dragging data feedback from the origin server, sending the new video-dragging data to the client.

9. The method according to claim 8, wherein querying the metadata instance corresponding to the new video dragging request from the preset hash table includes:
extracting an identifier of the target video from the new video dragging request, and calculating a hash value of the identifier of the target video; and
querying a location corresponding to the calculated hash value from the preset hash table, and using a metadata instance stored at the location as the metadata instance corresponding to the new video dragging request.

10. The method according to claim 8, wherein after determining the new start position and the new end position in the media data of the target video that correspond to the new video dragging parameters, the method further includes:
constructing a response message for the new video dragging request, the response message including response header information and metadata of a dragging video, wherein the response header information at least describes a data size of the dragging video defined by the new start position and the new end position, the metadata of the dragging video is used to describe playback attributes of the dragging video defined by the new start position and the new end position; and
feeding back the response message to the client.

11. A proxy server, wherein the proxy server comprises:
a video-dragging-request receiving unit, configured to receive a video dragging request directed to a target video and initiated by a client, the video dragging request including video dragging parameters used to define a drag start time point and a drag end time point;
a data acquisition unit, configured to, in response to the video dragging request, construct a video-range request directed to the target video, and send the video-range request to an origin server that stores the target video to obtain metadata and media-data header information of the target video;
a location determination unit, configured to parse the metadata and the media-data header information to obtain a metadata instance of the target video, and determine, according to the metadata instance, a start position and an end position in media data of the target video that correspond to the video dragging parameters; and
a video-dragging data sending unit, configured to construct a data acquisition request that contains the start position and the end position, send the data acquisition request to the origin server, and after receiving video-dragging data feedback from the origin server, send the video-dragging data to the client.

12. A proxy server, wherein the proxy server includes a memory and a processor, the memory is configured to store a computer program, and when the computer program is executed by the processor, the method according to any one of claims 1-10 is implemented.

13. A method for processing video-dragging data, wherein the method comprises:
receiving a video dragging request directed to a target video and initiated by a client, and querying a metadata instance corresponding to the video dragging request from a preset hash table;
determining, according to the metadata instance, a start position and an end position in media data of the target video that correspond to the video dragging request; and
constructing a data acquisition request that contains the start position and the end position, sending the data acquisition request to an origin server, and after receiving video-dragging data feedback from the origin server, sending the video-dragging data to the client.

14. The method according to claim 13, wherein querying the metadata instance corresponding to the video dragging request from the preset hash table includes:
identifying an identifier of the target video from the video dragging request, and calculating a hash value of the identifier; and
determining a location pointed by the hash value in the preset hash table, and using a metadata instance written at the determined location as the metadata instance corresponding to the video dragging request.

15. The method according to claim 13, wherein after determining the start position and the end position in the media data of the target video that correspond to the video dragging request, the method further includes:
constructing a response message for the video dragging request, the response message including response header information and metadata of a dragging video, wherein the response header information at least describes a data size of the dragging video defined by the start position and the end position, the metadata of the dragging video is used to describe playback attributes of the dragging video defined by the start position and the end position; and
feeding back the response message to the client.

16. The method according to claim 13, wherein the metadata instance corresponding to the video dragging request is generated in a following manner:
constructing a video-range request directed to the target video, and sending the video-range request to the origin server that stores the target video to obtain metadata and media-data header information of the target video; and
parsing the metadata and the media-data header information to obtain the metadata instance corresponding to the video dragging request.

17. A proxy server, wherein the proxy server includes a memory and a processor, the memory is configured to store a computer program, and when the computer program is executed by the processor, the method according to any one of claims 13-16 is implemented.
